# EUROPÄISCHE PATENTSCHRIFT

(11) **EP 0 942 619 B1**
(45) Veröffentlichungstag und Bekanntmachung des Hinweises auf die Patenterteilung: **31.03.2004**
(21) Anmeldenummer: 99101307.9
(22) Anmeldetag: 25.01.1999
(51) Int. Cl.: H04Q 11/04, H04M 1/00

(54) **Endgerätekombination für eine Vermittlungsanlage**
Terminal device combination for switching exchange
Combinaison de terminaux pour central téléphonique

(30) Priorität: 09.03.1998 DE 19809803
(43) Veröffentlichungstag der Anmeldung: 15.09.1999
(73) Patentinhaber: Tenovis GmbH & Co. KG, 60362 Frankfurt am Main (DE)
(72) Erfinder: Maldener, Nico-Johannes, 71229 Leonberg (DE); Glaser, Ulrich, 70499 Stuttgart (DE)
(74) Vertreter: Meissner, Bolte & Partner

(56) Entgegenhaltungen:
- US-A- 5 317 630
- "ISDN-TELEFON TECTRA KS MIT INTEGRIERTEM TERMINALADAPTER V.24" TELEKOM UNTERRICHTSBLAETTER, 1. Februar 1994, Seiten 72-77, XP000198842
- HIRSCHMANN P: "COMPUTER UND TELEFONIE" RADIO FERNSEHEN ELEKTRONIK, Bd. 45, Nr. 7, 1. Juli 1996, Seiten 14-16, XP000597927
- GREVE R H: "DER PC ALS MULTIFUNKTIONALES ENDGERAET AN ISDN-TK-ANLAGEN" NTZ NACHRICHTENTECHNISCHE ZEITSCHRIFT, Bd. 46, Nr. 6, 1. Juni 1993, Seiten 422-424, 426 - 427, XP000369596

## Beschreibung

### Stand der Technik

Telefonendgeräte sind insbesondere für die Bereitstellung besonderer Dienstemerkmale mit Zusatzgeräten, wie Personalcomputern ausgestattet. Diese Zusatzgeräte ermöglichen z. B. Dienstemerkmale wie Wahlhilfe, "Personal Telephone Manager" (PTM-Funktionen), Lokale Downloads, z. B. bei Verwendung eines elektronischen Telefonbuches, usw. (Prospekt der Bosch Telecom Integral 33xE, The ISDN-Telecommunications System-Interfaces and Protocols).

Aus HIRSCHMANN P: "COMPUTER UND TELEFONIE" RADIO FERNSEHEN ELEKTRONIK, Bd. 45, Nr. 7, 1. Juli 1996, Seiten 14-16, XP000597927, ist eine Endgerätekombination nach dem Oberbegriff von Anspruch 1 bekannt.

### Vorteile der Erfindung

Mit den Maßnahmen gemäß den kennzeichnenden Merkmalen des Anspruchs ist eine parallele Nutzung beider Endgeräte einer Endgerätekombination mit ihrem vollen Leistungsumfang möglich. Bei einer seither der üblichen Kombination von beispielsweise einem ISDN-Endgerät und einem Personal Computer stellte das ISDN-Endgerät nur einfachste Funktionen zur Verfügung. Lediglich das Abfragen und Beenden von Verbindungen konnte am Endgerät erfolgen.

Bei der Endgerätekombination nach der Erfindung stellen beide Endgeräte unabhängig voneinander alle TK-Funktionen zur Verfügung. Damit ist eine flexible Art der Bedienung zur Nutzung der Eigenschaften beider Endgeräte gegeben. Selbst wenn in nur einem der Endgeräte Datensätze für bestimmte Leistungsmerkmale, z. B. eine Suchfunktion aus einem elektronischen Telefonbuch, verfügbar sind, kann über einen Datentransfer von diesem Endgerät zum anderen Endgerät die volle Funktion in Anspruch genommen werden. Beim Beispiel des elektronischen Telefonbuches verbleiben die gespeicherten Telefonbuchdaten stets beim Personal Computer. Die über die Suchfunktion ausgewählten Daten werden aber beispielsweise zum ISDN-Endgerät hin übertragen und dort im Display auch angezeigt.

Jeder Benutzer stellt in Bezug auf die Bedienung von Geräten individuelle Anforderungen. Nicht immer wird der Umgang mit einem Personal Computer und dessen typischer Benutzerschnittstelle als Vorteil betrachtet. Bei dem erfindungsgemäßen Konzept bleibt es dem Benutzer überlassen, Funktionen an einem Gerät einzuleiten und am anderen weiterzuführen. Der individuelle Spielraum bei der Gestaltung des Umgangs mit den Geräten wird dadurch gesteigert.

Jedes ISDN-Endgerät enthält eine große Datenmenge bestehend aus Bedienungsoptionen und Zielwahldaten. Zur Verwaltung dieser Daten läßt sich beim erfindungsgemäßen Konzept ausschließlich der Personal Computer einsetzen.

Wird als erstes Endgerät ein ISDN-Endgerät verwendet, ist dieses mit seinen Funktionen vollkommen autark von dem Personal Computer. Bei einem Systemausfall des Personal Computers arbeitet das erste Endgerät störungsfrei und ohne Übertragungsunterbrechungen weiter. In sicherheitsrelevanten Bereichen entfallen somit zusätzliche Maßnahmen zur Erhöhung der Betriebssicherheit (Ersatzgeräte im Stand-By-Betrieb).

Über das zweite Endgerät ist, wenn es sich insbesondere um einen Personal Computer handelt, eine Inbetriebnahme und Wartung des ersten Endgeräts, z. B. ein ISDN-Endgerät, auf einfache Weise möglich.

### Zeichnungen

Anhand der Zeichnungen werden Ausführungsbeispiele der Erfindung erläutert. Es zeigen
Figur 1 eine Systemübersicht und
Figur 2 eine Funktionsübersicht der Endgerätekombination nach der Erfindung.

### Beschreibung von Ausführungsbeispielen

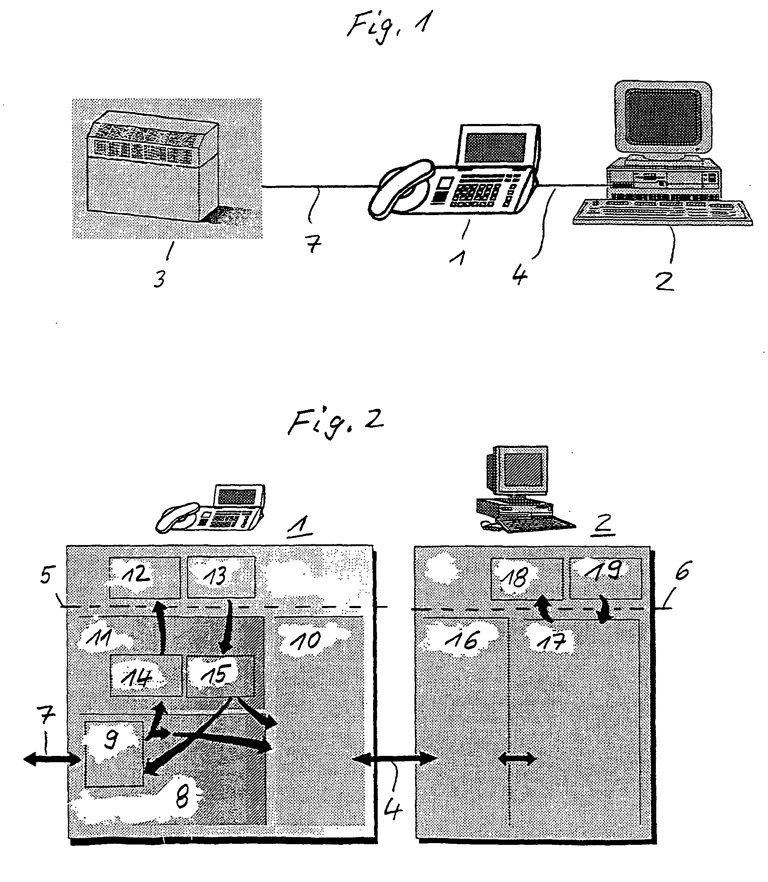

Bei der in Figur 1 vorgestellten Endgerätekombination ist ein erstes Endgerät 1, welches als ISDN-Endgerät mit Funktionstasten und Display ausgebildet ist, sowie ein zweites Endgerät 2 in Form eines Personal Computers an eine Vermittlungsanlage 3 über die Verbindungsleitung 7 angeschlossen. Das erste Endgerät 1 ist so ausgebildet, daß es die Adapterfunktion zwischen der Vermittlungsanlage 3 und einer Applikation auf dem zweiten Endgerät 2 ausführen kann. Die Applikation auf dem zweiten Endgerät ist speziell an die Bedienung von TK (Telekommunikations-)Leistungsmerkmalen angepaßt. Sie erfüllt also insbesondere die ECMA (European Computer Manufacturers Association)-Standards, beispielsweise gemäß Computer-Supported Telecommunications Applications, Technical Report TR/52 by the General Assembly of 28^{th}, June 1990, Genf. Zwischen den beiden Endgeräten 1 und 2 ist eine Schnittstelle 4 zum Datentausch und zur Synchronisierung der Benutzerschnittstellen 5 und 6 der beiden Endgeräte 1 und 2, s. Figur 2, vorgesehen. In Figur 2 sind die einzelnen Funktionen durch Pfeile dargestellt. Das Eingangsmodul 8 des ISDN-Endgeräts 1 ist direkt an die Verbindungsleitung 7 zur Vermittlungsanlage angeschlossen. Es übernimmt die Adapterfunktion für das Endgerät 2 und steuert die Schaltfunktionen. Vom integrierten Protokoll-Handler 9 wird das ISDN-Signalisierungsprotokoll des D-Kanals ausgewertet. Über das PC-Interface 10 wird die Schnittstelle 4 bedient und über das Benutzerinterface 11 die Benutzerschnittstelle 5 zum Display 12 und Tastenfeld 13. In das Benutzerinterface 11 sind die Baugruppen Display-Steuerung 14 und Tastenfeldsteuerung 15 integriert. Für die Ausführung der TK-Leistungsmerkmale ist im PC-Endgerät 2 ein Operator Set Interface 16 zwischen dem Benutzer-Interface 17 und der Schnittstelle 4 vorgesehen. Vom Benutzer-Interface 17 aus werden über die Benutzerschnittstelle 6 das Display 18, z. B. unter Verwendung der Fenstertechnik, und das PC-Keybord 19 gesteuert. Über die Schnittstelle 4 werden sowohl Steuersignale, insbesondere zur Synchronisierung als auch Daten, z. B. bei dem lokalen Leistungsmerkmal "Elektronisches Telefonbuch" zwischen den beiden Endgeräten ausgetauscht. Die Benutzerschnittstelle der Applikation stellt die im Endgerät 1 verfügbaren Leistungsmerkmale wie Rückruf, Rufumleitung usw. in entsprechend an die Eigenschaften eines Personalcomputers angepaßten Dialogen dar.

Die Schnittstelle 4 ist insbesondere zur Übertragung von Daten nach dem V24-Protokoll ausgebildet. Erfindungsgemäß sind die Benutzerschnittstellen 5 und 6 aufeinander synchronisiert, d. h. es ist gewährleistet, daß die zur Verfügung gestellten Leistungsmerkmale lokaler als auch externer Art sowohl am ersten als auch am zweiten Endgerät bedient werden können. Zur Synchronisierung der beiden Benutzerschnittstellen 5 und 6 wird über die Schnittstelle 4 ein entsprechendes Synchronisierungsprotokoll übertragen. Durch das gewählte Konzept aufeinander synchronisierter Benutzerschnittstellen wird jeder Zwischenschritt bei der Bedienung, unabhängig davon wo er eingeleitet wurde, an beiden Benutzerschnittstellen 5 und 6 synchron nachgeführt. Es kann z. B. das lokale Leistungsmerkmal "Elektronisches Telefonbuch" mit Speicherung der Daten im Personal Computer auch als externes Leistungsmerkmal zur Verfügung gestellt werden. Die Daten sind dann beispielsweise in der Vermittlungsanlage 3 abgespeichert. Die Suchfunktion wird über die Benutzerschnittstellen 5 und 6 aktiviert. Die ausgewählten Daten, z. B. Rufnummer, Identifizierungsmerkmale wie Name usw. können beispielsweise über den D-Kanal bei ISDN zu den Endgeräten 1 und 2 übertragen werden und über die Displays 12 und 18 dargestellt werden.

## Patentansprüche

1. Endgerätekombination mit besonderen Leistungsmerkmalen, die an eine Vermittlungsanlage (3) anschließbar ist, bestehend aus einem ersten Endgerät (1) sowie einem zweiten Endgerät (2), insbesondere einem Personal Computer, mittels dessen computerunterstützte Telekommunikationsanwendungen ausführbar sind, mit folgenden Merkmalen:
- das erste Endgerät (1) ist so ausgebildet, daß es die Adapterfunktion zwischen der Vermittlungsanlage (3) und einer Applikation auf dem zweiten Endgerät (2) ausführen kann, wobei zwischen den Endgeräten eine Schnittstelle vorgesehen ist,
**dadurch gekennzeichnet, dass**
- bei beiden Endgeräten aufeinander synchronisierte Benutzerschnittstellen (5, 6) vorgesehen sind, die gewährleisten, daß die zur Verfügung gestellten Leistungsmerkmale sowohl am ersten als auch am zweiten Endgerät (1, 2) bedient werden können, wobei die Synchronisierung und der Datentausch zwischen den Endgeräten (1, 2) über die vorhandene Schnittstelle (4) erfolgt.

2. Endgerätekombination nach Anspruch 1, **dadurch gekennzeichnet, daß** zwischen dem ersten und dem zweiten Endgerät (1, 2) eine Schnittstelle (4) insbesondere nach dem V24-Protokoll vorgesehen ist, über die ein Synchronisierungsprotokoll für die jeweiligen Benutzeroberflächen der beiden Endgeräte (1, 2) übertragbar ist.

3. Endgerätekombination nach einem der Ansprüche 1 oder 2, **dadurch gekennzeichnet, daß** jeder Bedienschritt unabhängig davon, bei welchem der Endgeräte (1, 2) er eingeleitet wurde, an beiden Benutzerschnittstellen (5, 6) synchron nachgeführt wird.

4. Endgerätekombination nach einem der Ansprüche 1 bis 3, **dadurch gekennzeichnet, daß** beide Endgeräte (1, 2 zur Bedienung lokaler als auch externer Leistungsmerkmale ausgebildet sind.

5. Endgerätekombination nach einem der Ansprüche 1 bis 4, **dadurch gekennzeichnet, daß** bei nur in einem Endgerät (1, 2) verfügbaren Leistungsmerkmalen ein Datentransfer zum jeweils anderen Endgerät (1, 2) ermöglicht ist.

## Claims

1. A terminal device combination with particular capability characteristics connectable to a switching exchange (3), having a first terminal (1) and a second terminal (2), especially a PC, with which computer-supported telecommunications applications can be conducted, comprising the following features:
- the first terminal (1) is formed to perform an adapter function between the switching exchange (3) and an application running on the second terminal, wherein an interface is provided between the terminals, **characterized in that**
- both terminals are provided with mutually synchronized user interfaces (5,6), which ensure that the available capability characteristics can be operated from both the first and the second terminals (1, 2), wherein the synchronization and the data exchange between the terminals (1, 2) takes place via the present interface (4).

2. The terminal device combination of claim 1, **characterized in that** an interface (4), especially according to the V24 protocol, is provided between the first and the second terminals (1, 2), via which a synchronizing protocol for the user interfaces of both terminals (1, 2) is transferable.

3. The terminal device combination of claim 1 or claim 2, **characterized in that** each operating step is tracked synchronously at both interfaces (5, 6), regardless from which of the terminals (1, 2) the step has been initiated.

4. The terminal device combination of any of claims 1 to 3, **characterized in that** both terminals (1, 2) are adapted for the operation of both local and external capability characteristics.

5. The terminal device combination of any of claims 1 to 4, **characterized in that** when capability characteristics are only available in one of the terminals (1, 2) a data transfer is enabled to the respective other terminal (1, 2).

## Revendications

1. Combinaison de terminaux aux caractéristiques fonctionnelles particulières qui peut être raccordée à une installation de transmission (3), se composant d'un premier terminal (1) ainsi que d'un deuxième terminal (2), en particulier un ordinateur personnel, au moyen duquel des applications de télécommunication assistées par ordinateur sont exécutables, aux caractéristiques suivantes :
- le premier terminal (1) est constitué de manière telle qu'il peut assurer la fonction d'adaptateur entre l'installation de transmission (3) et une application du deuxième terminal (2), une interface étant prévue entre les terminaux,
**caractérisée en ce que**
- des interfaces utilisateurs (5, 6) synchronisées l'une sur l'autre sont prévues aux deux terminaux, qui assurent que les caractéristiques fonctionnelles mises à disposition peuvent être exploitées tant au premier qu'également au deuxième terminal (1, 2), la synchronisation et l'échange de données entre les terminaux (1, 2) s'effectuant au travers de l'interface (4) existante.

2. Combinaison de terminaux selon la revendication 1,
**caractérisée en ce que**,
entre le premier et le deuxième terminal (1, 2), une interface (4), en particulier selon le protocole V24, est prévue, par laquelle un protocole de synchronisation pour les interfaces utilisateur correspondantes des deux terminaux (1, 2) est transmissible.

3. Procédé selon l'une quelconque des revendications 1 ou 2,
**caractérisée en ce que**
chaque étape d'exploitation peut être réalisée de façon synchrone aux deux interfaces utilisateurs (5, 6) indépendamment de celui des terminaux (1, 2) par lequel elle a été induite.

4. Procédé selon l'une quelconque des revendications 1 à 3,
**caractérisée en ce que**
les deux terminaux sont constitués pour l'exploitation de caractéristiques fonctionnelles locales ainsi qu'externes.

5. Procédé selon l'une quelconque des revendications 1 à 4,
**caractérisée en ce que**,
dans le cas de caractéristiques fonctionnelles disponibles uniquement sur un terminal (1, 2), un transfert de données vers l'autre terminal est rendu possible.
